# EUROPÄISCHE PATENTSCHRIFT

(11) **EP 3 910 400 B1**
(45) Veröffentlichungstag und Bekanntmachung des Hinweises auf die Patenterteilung: **24.04.2024**
(21) Anmeldenummer: 20174797.9
(22) Anmeldetag: 14.05.2020
(51) Int. Cl.: G02B 21/26, G02B 21/34

(54) **HALTESYSTEM ZUR POSITIONIERUNG EINER PROBE IN EINER VORRICHTUNG ZUR UNTERSUCHUNG UND/ODER MANIPULATION VON PROBEN UND VORRICHTUNG UMFASSEND EIN SOLCHES**
HOLDING SYSTEM FOR POSITIONING A SAMPLE IN A DEVICE FOR TESTING AND / OR MANIPULATING SAMPLES AND DEVICE COMPRISING SUCH A SYSTEM
SYSTÈME DE MAINTIEN PERMETTANT DE POSITIONNER UN ÉCHANTILLON DANS UN DISPOSITIF D'EXAMEN ET/OU DE MANIPULATION DES ÉCHANTILLONS ET DISPOSITIF COMPORTANT UN TEL SYSTÈME

(43) Veröffentlichungstag der Anmeldung: 17.11.2021
(73) Patentinhaber: Leica Microsystems CMS GmbH, 35578 Wetzlar (DE)
(72) Erfinder: Sieckmann, Frank, 75031 Eppingen (DE)
(74) Vertreter: Grünecker Patent- und Rechtsanwälte PartG mbB

(56) Entgegenhaltungen:
- EP-A1- 2 463 704
- EP-A1- 2 916 158
- WO-A1-2010/130639

## Beschreibung

Die Erfindung betrifft ein Haltesystem zur Befestigung an einer Vorrichtung zur Untersuchung und/oder zur Manipulation von Proben, eine Vorrichtung zur Untersuchung und/oder zur Manipulation von Proben, insbesondere umfassend wenigstens ein Gerät, wie beispielsweise ein Mikroskop und/oder ein Mikrotom und ein System zur Untersuchung und/oder zur Manipulation von Proben.

Es ist bekannt, zu untersuchende Proben automatisch einer Vorrichtung zur Untersuchung und/oder Manipulation der Probe zuzuführen bzw. aus dieser zu entnehmen. Insbesondere wenn die Probe zwischen zwei oder mehr Vorrichtungen oder in einem System umfassend mehrere Vorrichtungen ausgetauscht wird, kann es wünschenswert sein, wenigstens eine, bevorzugt mehrere Positionen einer Probe zu reproduzieren. Dies ist mit bekannten Lösungen nicht, mit zu geringer Präzision oder zu geringer Wiederholgenauigkeit möglich.

Die EP 2 463 704 A1 betrifft einen Mikroskoptisch mit einer Positioniereinrichtung zum Bewegen des Probenträgers in einer Verstellebene zur Verringerung einer Relativbewegung zwischen Probe und bildgebendem optischen System. Die EP 2 916 158 A1 zeigt eine ähnliche Positioniervorrichtung für Lichtquellen, einen Detektor und Optiken. Die WO 2010 / 130 639 A1 beschreibt einen elektrisch leitfähigen Träger und ein von diesem beweglich aufgenommenes Mikroskopgleitelement. Ein Mikroskopgleitsystem, welches den Träger und das Mikroskopgleitelement umfasst, erlaubt die Verwendung ein und desselben Trägers in der optischen Mikroskopie und der Teilchenstrahl-Mikroskopie unter Nutzung von Justiermarkierungen des Trägers.

Aufgabe der vorliegenden Erfindung ist es somit, die Wiederholbarkeit der Positionierung einer Probe zu verbessern und damit bekannte Vorrichtungen oder Systeme schneller und effizienter zu machen.

Die Erfindung löst die obige Aufgabe für das eingangs erwähnte Haltesystem dadurch, dass es ein Haltemodul zur Befestigung des Haltesystems an der Vorrichtung und ein am Haltemodul wiederholt austauschbar gehaltenes Trägermodul zur Aufnahme und/oder Halterung einer Probe umfasst, wobei das Haltesystem eine Referenzposition für das Trägermodul bereitstellt, in der das Trägermodul in einer wiederholt reproduzierbaren relativen Position zum Haltemodul festgelegt ist, wobei das Trägermodul des Haltesystems in der Referenzposition mit dem Haltemodul verrastbar ist.

Für die eingangs genannte Vorrichtung löst die vorliegende Erfindung die Aufgabe dadurch, dass die Vorrichtung ein erfindungsgemäßes Haltesystem umfasst.

Für das erfindungsgemäße System wird die obige Aufgabe durch die Erfindung dadurch gelöst, dass das System ein Haltesystem gemäß der Erfindung und wenigstens zwei Vorrichtungen zur Untersuchung und/oder zur Manipulation von Proben umfasst, wobei jede der wenigstens zwei Vorrichtungen mit wenigstens einem Haltemodul versehen ist.

Die Vorrichtung zur Untersuchung und/oder zur Manipulation von Proben kann insbesondere ein Mikroskop und/oder ein Mikrotom und/oder ein Probenmanipulationssystem (beispielsweise Lasermikrodissektionssystem, System zur Laserablation, System zum Bleichen von Proben) sein, wobei die vorliegende Erfindung nicht auf diese Ausgestaltungen beschränkt ist. Erfindungsgemäß kann die Vorrichtung eine Kombination beliebig vieler Geräte, wie beispielsweise beliebig vieler Mikroskope und/oder beliebig vieler Mikrotome und/oder beliebig vieler Probenmanipulationssysteme und/oder beliebig vieler anderer Geräte umfassen.

Das erfindungsgemäße Haltesystem, sowie die erfindungsgemäße Vorrichtung und das erfindungsgemäße System, welche jeweils das erfindungsgemäße Haltesystem umfassen, sind somit vorteilhafterweise dazu ausgestaltet, eine Position einer Probe auch beim Austausch der Probe zwischen unterschiedlichen Vorrichtungen oder unterschiedlichen Systemen oder zwischen Vorrichtungen eines Systems wiederholt zu reproduzieren, d.h. einzustellen.

Durch die leicht reproduzierbare Referenzposition ist es beispielsweise für den Endanwender auch leicht möglich, unterschiedliche Probenmodule gegeneinander auszutauschen, wobei nach dem Austausch eines Probenmoduls die Probe entweder an der zuvor gefundenen Stelle liegt, oder zumindest zu dieser bewegt werden kann. Dies ist möglich, da die Probe an einer bekannten Position liegt. Auch bei Proben, die ihre Position bezüglich des Probenmoduls zeitlich verändern ist die Referenzposition für einen ortstreuten Probenwechsel nutzbar, da mit dieser eine zuvor bestimmte Position der Probe zu einem vorherigen Zeitpunkt reproduziert werden kann. In Abhängigkeit bzw. unter Berücksichtigung der Beweglichkeit der Probe und/oder der vergangenen Zeit kann die erneut eingestellte Referenzposition somit als Mittelpunkt eines Positionskreises eingestellt werden, innerhalb dessen sich die Probe nach Reproduktion der Referenzposition befindet. Ein solcher Positionskreis kann durch einen Bewegungsradius und die Referenzposition definiert sein.

Dies erlaubt es Proben aus der Vorrichtung oder dem System zu entnehmen, um diese zu manipulieren und anschließend wieder in die Referenzposition zu bringen. Erfindungsgemäß ist somit ein ortstreuer Probenwechsel zwischen unterschiedlichen Vorrichtungen bzw. unterschiedlichen Systemen oder ein Wechsel einer Probe bzw. eines die Probe haltenden Trägers, das heißt des Probenmoduls (alternativ kann dieses auch als Probenträger bezeichnet werden), sehr einfach realisierbar. Dies kann die Effizienz so genannter Messketten, umfassend mehrere Vorrichtungen deutlich steigern.

Eine solche Ortstreue nach Probenwechsel ist ein wichtiger Aspekt der vorliegenden Erfindung.

Bei einem ortstreuen Probenwechsel ist die Position der Probe relativ zu einem Referenzpunkt des Probenmoduls bestimmt, so dass die Position der Probe im Koordinatensystem des Probenmoduls bekannt ist. Die Probe verbleibt normalerweise auch während und nach einem Transport zu einem anderen System (zur Manipulation/Untersuchung etc.) im Wesentlichen an dieser bekannten Position im Koordinatensystem des Probenmoduls (die Probe zeigt somit ein ortstreues Verhalten). Da die relative Lagebeziehung zwischen Referenzpunkt und der Referenzposition des Haltesystems bekannt ist und überdies erfindungsgemäß auch nach erfolgtem Austausch und/oder Transport des Probemoduls bekannt ist, ist die Probenposition relativ zum Haltesystem ebenso eineindeutig bestimm- und reproduzierbar.

Unter dem Referenzpunkt ist hierbei ein Punkt im Koordinatensystem des Probenmoduls zu verstehen. Dieser ist nicht identisch mit der Referenzposition des Trägermoduls. Der Referenzpunkt steht aber durch die vom Haltesystem bereitgestellt Referenzposition des Trägermoduls, beispielsweise nach Anbringen des Probenmoduls an einem System, in fester Beziehung zu dieser.

Es ist besonders vorteilhaft, wenn die Position der Probe relativ zum Probenmodul bei Austausch des Probenmoduls im Wesentlichen konstant ist oder sich relativ zum Probenmodul nicht oder nur wenig verändert.

Allerdings können auch Korrekturen von eventuellen Probenbewegungen möglich sein, sofern diese erfasst werden, zum Beispiel bei einer sich zeitlich hinsichtlich ihrer Position/Ausdehnung verändernden lebenden biologischen Probe. Eine eigenständige Bewegung der Probe ist also kein Ausschlusskriterium für eine Anwendung der Erfindung.

Haben Systeme, zwischen denen die Probe bewegt werden soll, definierte Positionen für das Probenmodul (aufgrund der durch das jeweilige Haltesystem bereitgestellten jeweiligen wenigstens einen Referenzposition), so ist die Position der Probe relativ zu jedem einzelnen dieser Systeme bekannt und kann reproduziert werden. Hierbei sind lediglich die Raumpositionen im Koordinatensystem des Trägermoduls, im Koordinatensystem des Haltesystems und/oder im Koordinatensystem der Vorrichtung relevant.

Die Erfindung ermöglicht durch konstruktive Maßnahmen, d.h. durch mechanische, eineindeutig definierte Randbedingungen, einen ortstreuen Probenwechsel. Vorteilhafterweise können hierdurch Fehler, insbesondere Anwenderfehler, vermieden werden. Die vorliegende Erfindung kann somit vorteilhafterweise für korrelative Verfahren wie bspw. CLEM (correlative lightelectron microscopy) verwendet werden. Bei korrelativen Verfahren werden zum Beispiel unterschiedliche Mikroskopieverfahren, aber auch soft- und hardwarebasierte Datenverarbeitung, unterschiedliche Messtechniken, oder bereits vorliegende Daten miteinander kombiniert und deren Ergebnisse miteinander korreliert. So können beispielsweise beim CLEM lichtmikroskopische Bilddaten einer Probe mit elektronenmikroskopischen Bilddaten der Probe kombiniert werden. Finden diese Messungen nicht simultan statt, so ist eine reproduzierbare Positionierung der Probe zur Korrelation erhaltener Bilddaten vorteilhaft.

Ein weiterer Vorteil des erfindungsgemäßen Haltesystems ist ein geringerer konstruktiver Aufwand zur Verbindung mehrerer Gerätearten (Mikroskopie-/Manipulationssysteme etc.): Es ist deutlich aufwendiger, ein Gerät zu konstruieren, das die Funktionalitäten zweier Gerätetypen wie eines Mikroskops und eines Manipulationsgeräts (bspw. eines Mikrodissektionsgerät) in einer Einheit integriert, anstatt beide Systeme mittels des erfindungsgemäßen Haltesystems zu koppeln.

Der Gegenstand der vorliegenden Erfindung kann durch jeweils für sich vorteilhafte und im Folgenden näher beschriebene Ausgestaltungen weiter verbessert werden.

Das Haltesystem ist als ein, aus wenigstens zwei oder mehreren Elementen bestehende System zu verstehen, welches dazu ausgestaltet ist, ein Probenmodul an einer Vorrichtung zur Untersuchung und/oder Manipulation einer Probe zu halten. Das Haltesystem stellt somit ein Verbindungsglied zwischen einer Vorrichtung zur Untersuchung und/oder Manipulation von Proben und einem Probenmodul dar. Die Vorrichtung und/oder das Probenmodul können hierbei bekannt sein. Das Probenmodul kann Elemente zur Untersuchung der Probe und/oder zur Manipulation der Probe aufweisen, wobei die Steuerung dieser Elemente und/oder die von diesen Elementen gelieferten oder zu diesen Elementen übertragenen Daten (z.B. Sensordaten) mittelbar über das Haltesystem oder aber auch unabhängig vom Haltesystem erfolgen kann bzw. übertragen werden können.

Das Haltemodul ist ein Teil des Haltesystems, welcher ortsfest zur Vorrichtung anbringbar sein kann oder angebracht ist. Mit diesem, bezüglich der Vorrichtung ortsfesten Haltemodul ist das Trägermodul wiederholt austauschbar verbunden. Das Trägermodul ist somit im Gegensatz zum Haltemodul nicht permanent ortsfest zur Vorrichtung. Das Trägermodul ist ein weiterer Bestandteil des Haltesystems, wobei das Haltesystem weitere Elemente umfassen kann.

Das Haltesystem kann insbesondere modular sein und beispielsweise als Modul ausgebildet sein. Das Haltesystem kann ferner in Form eines Adapters bereitgestellt werden, um mit nahezu beliebigen Vorrichtungen oder Systemen zur Untersuchung und/oder zur Manipulation von Proben verbunden zu werden. Erfindungsgemäß kann wenigstens eine Referenzposition bereitgestellt werden, d.h., dass auch zwei, drei oder mehr Referenzpositionen bereitgestellt werden können.

Das erfindungsgemäße Haltesystem kann eine Führungsvorrichtung umfassen, über die das Trägermodul relativ zum Haltemodul beweglich am Haltemodul befestigt ist. Eine solche Führungsvorrichtung kann insbesondere die Referenzposition bereitstellen. Eine Führungsvorrichtung kann die Anzahl der Bewegungsfreiheitsgrade des Trägermoduls einschränken, beispielsweise von drei auf eine, so dass zur Einstellung der Referenzposition lediglich eine eindimensionale Positionsvariable überprüft und erreicht bzw. eingestellt werden muss. Das erfindungsgemäße Haltesystem kann hierzu ausgestaltet sein.

Das Trägermodul kann insbesondere verschieblich am Haltemodul befestigt sein.

Die Verrastbarkeit des Trägermoduls mit dem Haltemodul in der Referenzposition hat den Vorteil, dass ein solches verrastetes Trägermodul in seiner Lage, insbesondere in der Referenzposition, fixiert ist. Hierbei sind unterschiedliche Möglichkeiten der Verrastung denkbar, wie beispielsweise durch ein Gehemme, welches unter Krafteinwirkung die Verrastung wieder löst oder aber durch sich hinterschneidende Rastelemente, wie zum Beispiel die Kombination aus Rasthaken und Rastflächen. Letztere Möglichkeit der Verrastung kann zum Lösen der Verrastung ein mechanisches Auslenken wenigstens eines der Rasterelemente in einer vorab definierten Richtung benötigen. Weitere, bekannte Möglichkeiten der Verrastung sind hier verwendbar.

Die Verrastung des Trägermoduls mit dem Haltemodul kann bevorzugt wiederholt lösbar und insbesondere werkzeugfrei lösbar sein.

In einer weiteren vorteilhaften Ausgestaltung kann die Führungsvorrichtung ein Führungselement am Haltemodul und/oder ein Führungselement am Trägermodul aufweisen. Das Führungselement kann beispielsweise eine einfache Nut sein. Ferner sind beispielsweise Führungselemente denkbar, die sich abschnittsweise hintergreifen. Dieses abschnittsweise Hintergreifen kann am Führungselement des Haltemoduls und/oder am Führungselement des Trägermoduls erfolgen. Hier seien rein beispielhaft, stellvertretend und nicht einschränkend eine sogenannte Schwalbenschwanzführung oder die Führung in einer T-Nut genannt. Diese Führungselemente können monolithisch mit dem entsprechenden Modul verbunden sein.

Alternativ oder zusätzlich kann sich die Führungsvorrichtung zwischen dem Trägermodul und dem Haltemodul befinden. So kann in einer vorteilhaften Ausgestaltung des erfindungsgemä-ßen Haltesystems das Führungselement am Haltemodul und/oder das Führungselement am Trägermodul zumindest teilweise als Schiene ausgebildet sein, wobei das Trägermodul auf der Schiene relativ zum Haltemodul beweglich geführt sein kann. In dieser Ausgestaltung umfasst die Führungsvorrichtung somit wenigstens eine Schiene. Die Führungsvorrichtung kann ebenso zwei oder mehr Schienen umfassen.

Es kann wenigstens eine Schiene vorgesehen sein, wobei die wenigstens eine Schiene am Haltemodul oder am Trägermodul befestigt sein kann. In Abhängigkeit davon, ob die Schiene am Haltemodul oder am Trägermodul befestigt ist, stellt diese für jenes Element, an welchem die Schiene nicht befestigt ist, ein Führungselement dar. In einigen Ausgestaltungen können jedoch zwei Schienen oder Schienenabschnitte vorgesehen sein, die beide am Haltemodul oder am Trägermodul befestigt sein können bzw. kann jeweils mindestens eine Schiene oder ein Schienenabschnitt am Haltemodul und eine weitere Schiene oder ein weiterer Schienenabschnitt am Trägermodul befestigt sein.

Eine Möglichkeit, das Trägermodul relativ zum Haltemodul beweglich mittels der als Schiene ausgestalteten Führungsvorrichtung zu befestigen ist die Verwendung von Rädern oder Rollen, die beispielsweise am Trägermodul befestigt sind und welche beidseitig an der Schiene entlangrollen. Alternativ oder zusätzlich können Gleitelemente bereitgestellt sein, welche an der wenigstens einen Schiene entlanggleiten. Diese Gleitelemente können die Schiene oder den Schienenabschnitt abschnittsweise umfassen bzw. hintergreifen. Es ist möglich, dass das Trägermodul komplett vom Haltemodul getrennt werden kann, oder dass eine permanent vorhandene Führung beider Module zueinander bereitgestellt ist.

Das erfindungsgemäße Haltesystem kann dadurch verbessert werden, dass das Trägermodul wenigstens einen elektrischen Anschluss aufweist, mittels welchem das Trägermodul mit einem Gegenanschluss des Haltemoduls elektrisch verbindbar ist.

Der elektrische Anschluss kann beispielsweise der Stromversorgung und/oder dem Datenaustausch und/oder der Übertragung von Steuersignalen (bspw. für Motoren, Lichtquellen etc.) und/oder Sensorsignalen dienen. Hierbei kann bevorzugt eine Stromversorgung, falls diese während der Verschiebung des Trägermoduls benötigt wird, durch Einsatz eines mobilen Energiespeichers, wie eines Akkus oder durch stromführende Schienen realisiert werden. In letzterem Fall dienen die Schienen somit als Infrastruktur zur Übertragung elektrischer Energie und/oder zur Übertragung von Daten bzw. Steuersignalen und/oder Sensorsignalen.

In einer weiteren vorteilhaften Ausgestaltung des erfindungsgemäßen Haltesystems umfasst dieses ein Funkmodul, welches ausgestaltet ist, Daten vom Trägermodul zu senden und/oder Daten am Trägermodul zu empfangen.

D.h., für eine Datenübertragung oder eine Übertragung von Steuersignalen und/oder Sensorsignalen ist nicht zwingend ein speziell ausgeprägter elektrischer Anschluss erforderlich. Daten/Signale können bspw. auch über ein Schienensystem und/oder mittels einer durch diese Ausgestaltung bereitgestellten Funkverbindung, wie einschließlich und nicht beschränkend WiFi, Bluetooth, NFC etc. ausgetauscht werden.

Die Daten/Signale können mit einem zentralen Server ausgetauscht werden, wodurch eine hohe Autonomität gewährleistet wird. Die Daten-/Signalübertragung kann in Echtzeit und bevorzugt bidirektional erfolgen. Somit ist es möglich, auch während des Transports der Probe den Status bzw. Charakteristika der Probe (Temperatur, pH-Wert, Luftfeuchtigkeit etc.) jederzeit an einen Server zu übermitteln.

Eine solche Funkübertragung mit einem Server ist sehr flexibel, da sie es ermöglicht, nahezu beliebige Geräte zu verwenden und/oder zu kombinieren. Die einzelnen Geräte benötigen selbst keine komplexe Datenverarbeitungsvorrichtung, da diese zentral bereitgestellt werden kann. Insbesondere können somit zusätzliche Geräte einfach einem solchen Daten- und Signalübertragungssystem hinzugefügt und deren Funktionalität zugänglich gemacht werden. Der Ausbau mittels weiterer Vorrichtungen zur Untersuchung und/oder Manipulation von Proben, beispielsweise in einem Labor ist somit leicht und kostengünstig möglich.

Ein flexibler und einfacher Einsatz von Trägermodulen ist auch ohne die Verwendung von Schienen möglich. Beispielsweise kann der Benutzer die Probe bzw. das Trägermodul manuell von einer Vorrichtung zu einer weiteren Vorrichtung transportieren und in dieser einsetzen, wobei die erforderlichen Daten über die Probe etc. nach Ankopplung des Trägermoduls ausgetauscht werden können. Ebenso erlaubt die Erfindung eine Automatisierung durch die Nutzung eines Roboters und/oder eines autonom agierenden (z.B. autonom fahrenden) Systems. So kann ein Trägermodul zum Beispiel durch ein autonomes Fahrzeug mit Greifarmen, einen Roboter o.Ä. von einer Vorrichtung zu einer weiteren Vorrichtung transportiert werden.

Der Austausch von Daten und/oder Signalen kann auch beim Einsatz von Funk leicht sichergestellt werden (hier können auch Daten/Signale während des Probentransports übermittelt werden). Das jeweilige Trägermodul kann dann durch Schalter, Sensoren oder ähnliche Elemente identifiziert werden, wobei der Datenaustausch autonom erfolgen kann. Ebenso ist ein Umschalten der Daten-/Signalverbindung zwischen Funk und kabelgebundener Datenübertragung möglich.

In einer weiteren Ausgestaltung können Daten- und/oder Leistungsleitungen des Anschlusses zumindest teilweise vom Anschluss zu einem Modulkonnektor des Trägermoduls durchgeschleift werden. Somit kann eine Schnittstelle zwischen der Vorrichtung, an welcher das Haltesystem befestigt ist, und auf dem Trägermodul anbringbarer oder angebrachter Probenmodule und/oder Elemente bereitgestellt werden.

Ein Modulkonnektor kann in Form eines Steckers oder einer Buchse eine Anschlussmöglichkeit darstellen, mittels welcher ein Probenmodul und eventuell darauf oder daran angeordnete funktionale Elemente mit der Vorrichtung verbindbar oder mit dieser verbunden sind. Elektrische Energie und/oder Daten und/oder Steuersignale und/oder Sensorsignale können somit von der Vorrichtung über das Haltemodul zum Trägermodul und von dort über den Modulkonnektor zu einem Probenmodul übertragen werden. Der Modulkonnektor kann dazu ausgestaltet sein, eine beliebige Anzahl von Daten- und/oder Signalleitungen zu verbinden. Über den Modulkonnektor kann bei einer kabelgebundenen Verbindung auch eine Stromversorgung bereitgestellt sein.

Das Probenmodul kann einen Probenträgerkonnektor aufweisen, um eine solche Verbindung herzustellen. Das Probenmodul kann über den Probenträgerkonnektor unmittelbar oder mittelbar über das Trägermodul mit einer Vorrichtung/einem Server verbunden sein. Alternativ oder zusätzlich ist eine mittelbare Verbindung über das Trägermodul und das Haltemodul zur Vorrichtung/zum Server möglich. Die kabelgebundene Verbindung kann mittels separater, außerhalb der Elemente des Systems verlaufender Kabel, oder mittels im Probenmodul, im Trägermodul oder im Haltemodul verlaufender interner Kabel hergestellt sein. Alternativ oder zusätzlich ist eine Verbindung über Funk möglich. Das Probenmodul kann einen ersten und einen zweiten Probenträgerkonnektor aufweisen. Diese können auf gegenüberliegenden Seiten des Probenmoduls angeordnet sein. Ebenso kann das Trägermodul und/oder das Haltemodul einen ersten und einen zweiten Modulkonnektor aufweisen, die auf gegenüberliegenden Seiten des entsprechenden Moduls angeordnet sein können. Zur Unterscheidung kann der Modulkonnektor des Haltemoduls als dritter Modulkonnektor bezeichnet werden.

Der erste und zweite und dritte Modulkonnektor bzw. der erste und zweite Probenträgerkonnektor können eine identische Geometrie und/oder eine identische Anschlussbelegung aufweisen. Allerdings kann der dritte Modulkonnektor zum Anschluss eines Kabels ausgestaltet sein, um eine kabelgebundene Verbindung zwischen Haltemodul und Vorrichtung und/oder einem getrennten Server herzustellen, wobei der erste (und/oder der zweite) Modulkonnektor zur Verbindung zwischen Trägermodul und Probenmodul dienen kann.

Der erste und zweite Modulkonnektor bzw. der erste und zweite Probenträgerkonnektor, d.h. die Modulkonnektoren eines Moduls können alternativ (zur Optimierung der Lage des Anschlusses eines Kabels) oder simultan (z.B. zum Anschluss zweier Geräte) verwendet werden.

Rein beispielhaft und nicht einschränkend können ein Verschiebetisch und eine Lichtquelle auf dem Trägermodul oder auf einem am Trägermodul angebrachten Probenmodul angebracht sein, wobei beide über den Modulkonnektor mit dem Anschluss des Trägermoduls und folglich mit der Vorrichtung verbunden sein können. Seitens der Vorrichtung können diese beiden Elemente (Verschiebetisch und Lichtquelle) somit gespeist, und/oder gesteuert und/oder ausgelesen werden. Alternativ können diese, wie oben erwähnt, über eine Funkverbindung ausgelesen und/oder gesteuert werden. Das oben erwähnte Funkmodul kann somit entweder durch das Trägermodul oder durch auf diesem angeordnete weitere Module bereitgestellt sein.

Mittels des Modulkonnektors kann in einer anderen Ausgestaltung eine direkte kabelgebundene Verbindung zwischen der Vorrichtung (umfassend ein oder mehrere Geräte, insbesondere ein oder mehrere Mikroskope und/oder ein oder mehrere Mikrotome) und/oder einem externen Server herstellbar oder hergestellt sein. Diese Verbindung kann alternativ oder zusätzlich eine Funkverbindung sein.

Alternativ kann diese Verbindung zur Vorrichtung und/oder zum Server auch direkt vom Probenmodul (und darauf/daran angebrachter Elemente) erfolgen. Diese Verbindung erfolgt somit unmittelbar und nicht über das Trägermodul und kann eine kabelgebundene und/oder eine Funkverbindung sein. Im Allgemeinen können die verbindenden Kabel innerhalb oder außerhalb der Gehäuse verlaufen.

Vorteilhafterweise wird das Erreichen der Referenzposition (bzw. wenigstens einer Referenzposition), bevorzugt jeder Referenzposition des Trägermoduls durch das Haltesystem erkannt bzw. ist das Haltesystem für eine solche Erkennung ausgestaltet. Hierzu kann dieses in einer vorteilhaften Ausgestaltung wenigstens ein Element aus der Gruppe umfassen, die
- eine Anschlagfläche des Trägermoduls, welche zumindest in der Referenzposition an einer Gegenanschlagsfläche des Haltemoduls anliegt; und
- ein Verrastungselement des Trägermoduls, welches zumindest in der Referenzposition mit einem Gegenrastelement des Haltemoduls verrastet ist; und
- eine Detektoreinrichtung, die ausgestaltet ist, zumindest die Referenzposition des Trägermoduls zu detektieren und bei Erreichen der Referenzposition ein die Referenzposition repräsentierendes Positionssignal auszugeben, umfasst.

Für das Erkennen des Erreichens der Referenzposition können Sensoren bzw. Detektoren verwendet werden, die auf unterschiedlichen physikalischen Prinzipien beruhen. Beispielsweise optische Sensoren, mechanische Sensoren, Ultraschallsensoren, Näherungssensoren, magnetische Sensoren und entsprechende Sensoren die auf mehreren Wirkprinzipien basieren (elektrische Laufzeitmessung eines optischen Impulses). Mit diesen Sensoren kann beispielsweise die Position einer Anschlagfläche bzw. eines Verrastungselements bestimmt werden. Ferner kann ein solches, das Erreichen der Referenzposition repräsentierendes Signal dazu verwendet werden, eine Relativbewegung zwischen Haltemodul und Trägermodul zu stoppen und beide Module in dieser Relativposition zueinander zu blockieren. Der Sensor / die Detektoreinrichtung kann jedoch jegliche Positionen des Trägermoduls ermitteln und in Form eines, die Position des Trägermoduls repräsentierenden Positionssignals bereitstellen. Die Detektoreinrichtung kann vom Haltemodul und/oder vom Trägermodul und/oder von der Vorrichtung bereitgestellt sein. Es können mehrere Detektoreinrichtungen vorgesehen sein.

Das erfindungsgemäße Haltesystem kann ferner ausgestaltet sein, in Abhängigkeit einer Position des Trägermoduls ein Steuersignal auszugeben, wobei die Position des Trägermoduls von der Detektoreinrichtung ermittelt wird.

In einer Ausgestaltung des erfindungsgemäßen Systems kann das vom Haltesystem ausgegebene Steuersignal wenigstens einen in der ermittelten Position des Trägermoduls auszuführenden, direkten oder indirekten Verfahrensschritt zur Untersuchung und/oder zur Manipulation der Probe repräsentieren.

Das Steuersignal kann ferner mehrere solcher Verfahrensschritte repräsentieren, d.h. eine Abfolge an Verfahrensschritten bereitstellen. Hierzu kann das Haltesystem eine Datenverarbeitungseinheit umfassen.

Unter einem direkten Verfahrensschritt ist beispielsweise der Start einer Messung oder ein untergeordneter Verfahrensschritt, wie z.B. das Bewegen der Probe zur nächsten Scanposition oder das Verändern eines Beleuchtungsparameters, zu verstehen.

Ein indirekter Verfahrensschritt kann beispielsweise die Ausgabe einer Statusinformation an einen Benutzer oder das Öffnen der Türen einer Klimakammer zum Hinein- oder Herausbewegen der Probe sein. Diese indirekten Verfahrensschritte betreffen somit nicht die Untersuchung und/oder Manipulation der Probe an sich, sondern nebenrangige, die Untersuchung/Manipulation unterstützende, oder begleitende Verfahrensschritte.

In einer weiteren Ausgestaltung kann die Ausgabe des Steuersignals (129p) abhängig von einem Vergleich der Position des Trägermoduls (109) mit wenigstens einer vorab festgelegten Referenzposition des Trägermoduls (109) sein.

Somit kann das Haltesystem ausgestaltet sein, in Abhängigkeit der Position des Trägermoduls ein Steuersignal bereitzustellen. Das Steuersignal kann somit durch Vergleich der Ist-Position des Trägermoduls mit vorab gespeicherten Referenzpositionen bereitgestellt oder ermittelt werden. Jeder Referenzposition kann ein individuelles Steuersignal zugeordnet sein, welches bereitgestellt wird, wenn die Ist-Position mit der Referenzposition übereinstimmt. Das Haltesystem kann die Datenverarbeitungseinheit umfassen, die ein Korrelationsmodul aufweisen kann oder mit einem Korrelationsmodul verbindbar oder verbunden sein kann, wobei die Datenverarbeitungseinheit, aber insbesondere das Korrelationsmodul ausgestaltet sein kann, in Abhängigkeit der Position des Trägermoduls das Steuersignal bereitzustellen

Das Steuersignal kann eine Verfahrensaktivierung bzw. Verfahrensumschaltung repräsentieren und/oder diese auslösen. Ferner können aufgrund des Steuersignals bestimmte Aktionen bei Erreichen und/oder Verlassen einer definierten Position des Trägermoduls durchgeführt bzw. ausgelöst werden. Diese Position kann die wenigstens eine Referenzposition oder jegliche beliebige Position des Trägermoduls sein. Sobald das Trägermodul die Referenzposition und/oder eine andere definierte Position relativ zum Haltemodul gebracht worden ist (die Position ist z.B durch Sensoren/Detektoreinrichtung feststellbar), können bestimmte Aktionen des Systems - insbesondere automatisiert- ausgelöst werden: Beispielsweise kann die Vorrichtung in einen günstigen Ausgangsstatus/ eine Ausgangsposition für das nachfolgend durchzuführende Mess- und/oder Manipulationsverfahren gebracht werden.

Auch kann die Vorrichtung in einen Status/eine Position gebracht werden, der/die ein weiteres erfolgreiches Durchführen der weiteren Bewegung des Trägermoduls ermöglicht. So kann beispielsweise aufgrund des Erreichens des Trägermoduls einer bestimmten Position ein Steuersignal bereitgestellt werden, welches eine Bewegung eines Objektivs nach oben repräsentiert, so dass dieses einer Probe ausweichen kann. Ebenso können andere Elemente aus dem Weg gefahren werden, falls sie sich im Verfahrweg des Trägermoduls befinden sollten. Rein beispielhaft und nicht einschränkend oder abschließend seien hier auch Injektionssysteme oder Türen von Klimakammern genannt. Sobald sich das Trägermodul in einer vorbestimmten Position befindet, wird diese durch die Detektoreinrichtung an die Datenverarbeitungseinheit weitergegeben. Im Abgleich mit vorab gespeicherten Referenzpositionen kann die Datenverarbeitungseinheit, insbesondere das Korrelationsmodul, ein Steuersignal bereitstellen, welches eine Bewegung eines solchen Elementes repräsentieren und die Bewegung des Elementes (beispielsweise aus dem Verfahrweg heraus) triggern, d.h. starten kann.

Insbesondere können die Steuersignale den Standards für zu steuernde Elemente bzw. deren Controller entsprechen, so dass bereits verfügbare Systeme/Geräte, beispielsweise umfassend Mikroskope und/oder Mikrotome und/oder Probenmanipulationssysteme, sowie deren Elemente wie Verschiebetische, Beleuchtungssysteme etc. auf einfache Weise durch das erfindungsgemäße Haltesystem ergänzt und verbessert werden können. Die vom erfindungsgemäßen Haltesystem dieser Ausgestaltung bereitgestellten Steuersignale können somit von den verfügbaren Elementen / Controllern verstanden und korrekt interpretiert werden.

Nach Erreichen der Referenzposition oder einer vorab definierten Position des Trägermoduls kann die Vorrichtung in einen Startzustand gebracht werden (gesteuert durch die Steuersignale der Datenverarbeitungseinheit). Dann kann nach dieser Verfahrensumschaltung automatisiert das gewünschte Verfahren durchgeführt werden. Alle hierfür notwendigen Parameter können mittels des Trägermodules und/oder über einen Server, d.h. der Datenverarbeitungseinheit, übermittelt werden.

Rein exemplarisch und nicht einschränkend kann somit ein Trägermodul an der Vorrichtung, wie einem Mikroskop angebracht werden. Hierfür ist es unerheblich, ob dies durch einen Nutzer, über ein Schienensystem, oder durch ein autonom fahrendes System wie einen Roboter geschieht. Die Vorrichtung kann dann - nach Detektion der Referenzposition des Trägermoduls - gleich die passende Messung durchführen. Entsprechende automatisierte Messungen sind auch mit einem Mikrotom und jedem anderen Gerät möglich.

Allgemein zusammengefasst werden durch die Datenverarbeitungseinheit auszuführende Aktionen getriggert, sobald das Trägermodul sich in einer definierten Position relativ zum Haltemodul befindet. Es wird somit eine zeitsparende und reproduzierbar wiederholbare Durchführung des nachfolgenden Mess-/Manipulationsverfahrens ermöglicht. Ferner ist eine adaptive Verfahrensumschaltung möglich.

Weitere Beispiele der Steuerung durch Steuersignale der Datenverarbeitungseinheit sind: 1) Objektiv wird in Startposition gefahren 2) Deaktivierung/Aktivierung eines Lasers etc. 3) Aktivierung/Deaktivierung von Heiz-/Kühlsystemen und/oder einer Gaszuführung 4) Warnsignale/Statusinformationen für Kunden (Licht, Ton) u.v.m.

Die Erfindung ermöglicht somit, durch die mechanisch definierten Randbedingungen mittels wohldefinierter Referenzpositionen, z.B. des Trägermoduls, insgesamt eine vollautomatisierte Verarbeitung (Vermessung, Manipulation etc.) von Proben auf unterschiedlichen Systemen durchzuführen. Erfindungsgemäß ist es somit möglich, dass eine Probenposition an System A auch an System B präzise wiedergefunden werden kann, ohne auf weitere, tendenziell fehleranfällige Maßnahmen wie Marker/Fiducials (optische Referenzpunkte/Passermarken auf oder nahe der Probe) oder softwarebasierte Korrelationsverfahren zurückgreifen zu müssen.

Das Haltesystem kann in einer weiteren Ausgestaltung wenigstens ein weiteres Trägermodul umfassen, wobei das Trägermodul und das wenigstens eine weitere Trägermodul gegeneinander austauschbar am Haltemodul beweglich anbringbar ausgestaltet sind.

Somit können zwei oder mehr Proben auf unterschiedlichen, separaten Trägermodulen angeordnet und gehalten sein. Werden diese Proben nacheinander in einer Vorrichtung, beispielsweise einem Mikroskop untersucht und darauffolgend zur Probenmanipulation in eine Probenmanipulationsvorrichtung eingesetzt, so ist eine exakte und reproduzierbare Positionierung jeder der individuellen Proben im eingangs verwendeten Mikroskop möglich. Ein Workflow, der das Auswechseln der Proben und somit der Trägermodule vorsieht, wird somit nicht durch das Suchen vorab bereits eingestellter Positionen der jeweiligen Probe verlangsamt. Bereits gefundene interessierende Bereiche (field of interest) können somit rasch und ohne erneute Suche wiedergefunden und eingestellt werden. Das Haltesystem, die Vorrichtung und das System sind dazu ausgestaltet, diesen Bereich wiederzufinden und einzustellen.

Alternativ oder zusätzlich kann in einer weiteren Ausgestaltung des erfindungsgemäßen Haltesystems wenigstens ein weiteres Haltemodul vorgesehen sein, wobei das Trägermodul vom Haltemodul hin zum weiteren Haltemodul relativ zu diesen beweglich gehalten ist. Eine einfache Realisierung dieser Ausgestaltung ist mittels einer durchgängigen Schiene möglich. Diese kann das Haltemodul und das weitere Haltemodul miteinander verbinden, wobei das Trägermodul entlang bzw. auf der Schiene vom Haltemodul zum weiteren Haltemodul oder von weiteren Haltemodul zum Haltemodul bewegt werden kann bzw. sich aktiv selber bewegen kann. Eine solche Schiene ist somit mit dem Haltemodul und dem weiteren Haltemodul verbunden. Die Schiene kann entweder am Trägermodul oder an den beiden Haltemodulen befestigt sein.

Ebenso ist es denkbar, dass in einer weiteren vorteilhaften Ausgestaltung des erfindungsgemäßen Haltesystems wenigstens zwei Haltemodule vorgesehen sind, an welchen das wenigstens eine Trägermodul gehalten und abwechselnd in eine dem jeweiligen Haltemodul zugeordnete Referenzposition beweglich ist.

Die Bewegung des Haltemoduls kann in dieser Ausgestaltung direkt und linear sein. In einer anderen Ausgestaltung ist dies nicht notwendigerweise der Fall, da die Bewegung des Trägermoduls zwischen dem Haltemodul und dem weiteren Haltemodul nicht zwingend durch die Führungsvorrichtung bestimmt sein muss. Beispielsweise bei Verwendung einer Schwalbenschwanzführung am Trägermodul und Haltemodul und manuellem Transport des Trägermoduls durch einen Benutzer (oder durch ein autonom agierendes System) von einem Haltemodul zu einem weiteren Haltemodul.

In einer weiteren Ausgestaltung der erfindungsgemäßen Vorrichtung kann das Trägermodul mittels eines elektrischen Anschlusses wenigstens in der Referenzposition automatisch mit der Vorrichtung elektrisch oder über Funk verbunden sein.

D.h., dass beim Erreichen der Referenzposition die elektrische Verbindung hergestellt wird und beispielsweise ein Signal übertragen werden kann, welches das Erreichen der Referenzposition anzeigt.

Wie vorab bereits beschrieben kann der elektrische Anschluss verschiedene Zwecke erfüllen (Stromversorgung, Datenaustausch, Steuersignale etc.). Alternativ kann die Vorrichtung eine Funkübertragung mittels eines Funkmoduls vorsehen. Die Verbindung kann insbesondere zwischen der Vorrichtung und einem zentralen Server bestehen.

In einer weiteren Ausgestaltung kann die Vorrichtung einen solchen zentralen Server oder eine Datenverarbeitungseinheit umfassen. Ein Server kann als eine mögliche (komplexe) Ausgestaltung einer Datenverarbeitungseinheit angesehen werden. Die Datenverarbeitungseinheit oder der Server kann räumlich und auch physisch getrennt von den untersuchenden und/oder manipulierenden Elementen der Vorrichtung, beispielsweise vom Mikroskop/Mikrotom, platziert sein. Eine solche Datenverarbeitungseinheit kann auch zur Datenverarbeitung der Daten mehrerer Vorrichtungen wie Mikroskope und/oder mehrerer Mikrotome und/oder mehrerer Probenmanipulationsvorrichtungen ausgestaltet sein, wobei jede der Vorrichtungen mit wenigstens einem erfindungsgemäßen Haltesystem ausgestattet sein kann. Hierbei ist die Vorrichtung nicht auf Mikroskope und Mikrotome beschränkt.

Zusätzlich oder alternativ kann das Haltesystem oder die Vorrichtung eine Datenverarbeitungseinheit aufweisen, die ein Mikrokontroller oder ein FPGA sein kann. Ferner kann die Datenverarbeitungseinheit mit externen Recheneinheiten verbindbar oder verbunden sein. Die Datenverarbeitungseinheit kann ein Speichermodul umfassen und/oder mit einem oder mehreren Speichermodulen verbindbar oder verbunden sein. Speichermodule können beispielsweise fest verbaute Speicherbausteine in Form von RAM, ROM oder Flash-Speicher, optische, magnetische oder anders ausgestaltete Datenträger sein, die in einem entsprechenden Lesegerät eingelesen und/oder beschrieben werden können, so dass die Datenverarbeitungseinheit Zugriff auf einen solchen Datenträger hat. Die Datenverarbeitungseinheit kann als Hardware- oder als Softwarelösung realisiert sein.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar. Das erfindungsgemäße System mit wenigstens zwei Vorrichtungen zur Untersuchung und/oder zur Manipulation von Proben kann ein Haltesystem gemäß einer der oben beschriebenen Ausgestaltungen umfassen.

Im Folgenden soll die vorliegende Erfindung anhand beispielhafter Zeichnungen näher erläutert werden. In den Zeichnungen sind spezifische Ausgestaltungen des Haltesystems und/oder der Vorrichtung und/oder des Systems gezeigt. Diese Ausgestaltungen sind rein beispielhaft und nicht einschränkend. Ferner können technische Merkmale unterschiedlicher Zeichnungen beliebig miteinander kombiniert oder weggelassen werden.

In den Figuren ist folgendes schematisch gezeigt:
- Fig. 1: ein erfindungsgemäßes Haltesystem und eine erfindungsgemäße Vorrichtung;
- Fig. 2: das Haltesystem der Fig. 1 und weitere Ausgestaltungen des erfindungsgemäßen Haltesystems;
- Fig. 3: das Haltesystem der Fig. 1 und Details eines elektrischen Anschlusses;
- Fig. 4(a)-4(c): das erfindungsgemäße Haltesystem in einer weiteren Ausgestaltung und dessen Verwendung; und
- Fig. 5(a)-5(c): das erfindungsgemäße Haltesystem in einer weiteren Ausgestaltung und dessen Verwendung.

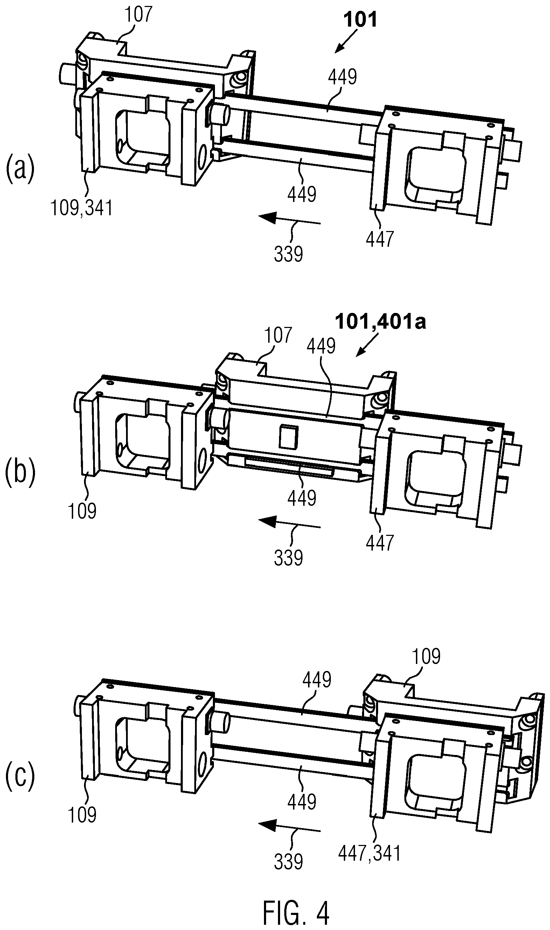

Im Folgenden beschriebene technische Merkmale und Merkmale gleicher technischer Funktion werden nachfolgend mit demselben Bezugszeichen bezeichnet. Hierbei bezeichnet die Hunderterstelle des Bezugszeichens die Figur, in welcher besagtes Merkmal das erste mal gezeigt ist. Der Übersichtlichkeit halber werden doppelte Beschreibungen und doppelte Ausführungen zu einzelnen technischen Merkmalen vermieden. Sofern nicht explizit ausgeschlossen, sind hierbei Erläuterungen, beispielsweise zum Haltesystem 101 auch auf ein beispielsweise in Fig. 4 gezeigtes Haltesystem übertragbar. Die im Folgenden beschriebenen Ausgestaltungen der Erfindung sind rein beispielhaft und nicht einschränkend.

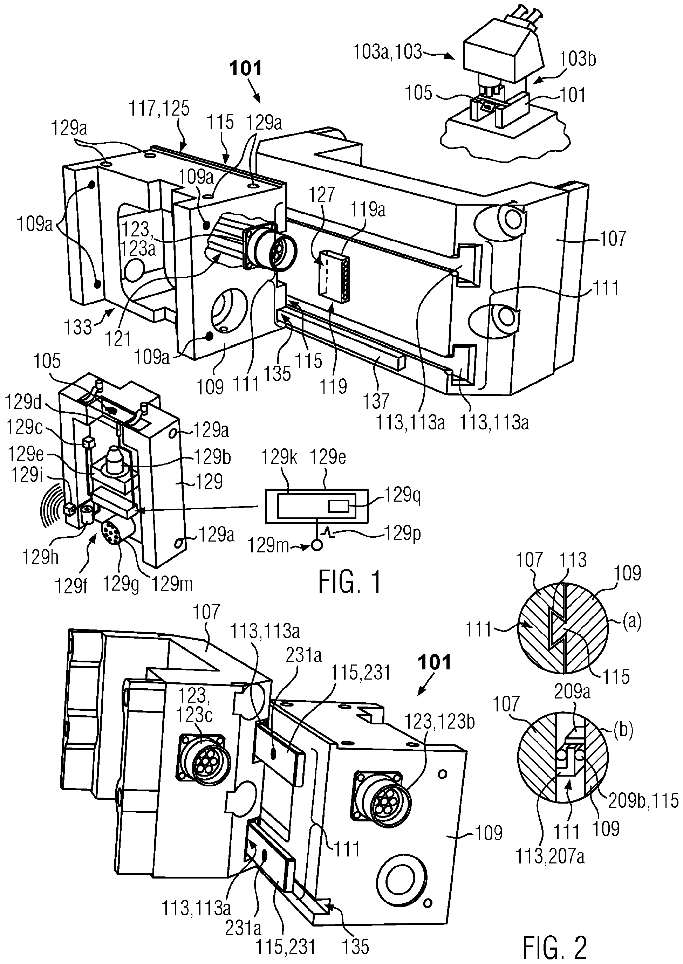

In der Fig. 1 ist eine Ausgestaltung eines erfindungsgemäßen Haltesystems 101 schematisch dargestellt. Das Haltesystem 101 ist zur Befestigung an einer Vorrichtung 103 ausgestaltet, wobei die Vorrichtung 103 zur Untersuchung und/oder zur Manipulation von Proben 105 dient. Die in der Fig. 1 gezeigte Vorrichtung ist beispielsweise ein Mikroskop 103a, kann jedoch wenigstens ein beliebiges Gerät zur Untersuchung und/oder zur Manipulation von Proben 105 umfassen.

In anderen, nicht gezeigten Ausgestaltungen kann die Vorrichtung 103 beispielsweise und nicht abschließend oder einschränkend ein Mikrotom und/oder eine Probenmanipulationsvorrichtung sein. Die Vorrichtung 103 kann in anderen (nicht gezeigten) Ausgestaltungen ein oder mehrere Geräte, beispielsweise ein oder mehrere Mikrotome und/oder ein oder mehrere Mikroskope 103a umfassen. Die Vorrichtung 103 ist in jedem Fall zur Untersuchung und/oder Manipulation von Proben ausgestaltet

Alle diese Vorrichtungen 103 können einen Probenaufnahmebereich 103b aufweisen in welchem die Probe 105 zur Untersuchung oder zur Manipulation mittels des erfindungsgemäßen Haltesystems 101 gehalten und positioniert wird.

Das Haltesystem 101 umfasst ein Haltemodul 107 mittels welchem das Haltesystem 101 an der Vorrichtung 103 befestigt werden kann. Am Haltemodul 107 ist ein Trägermodul 109 gehalten. Das Trägermodul 109 ist insbesondere wiederholt austauschbar am Haltemodul 107 gehalten und weist lediglich in der gezeigten Ausgestaltung der Fig. 1 eine U-Form auf. D.h. andere Ausgestaltungen bezüglich Form und Größe sind denkbar.

Die Fig. 1 zeigt in der kleinen Darstellung der Vorrichtung 103 eine auf dem Trägermodul 109 gehaltene Probe 105. Ferner ist ein beispielhaftes und schematisch gezeichnetes Probenmodul 129 gezeigt. Dieses kann in eine Aufnahmekulisse 133 des Trägermoduls 109 aufgenommen werden und beispielsweise mittels Gewindelöchern 129a und entsprechenden Bohrungen 109a des Trägermoduls 109 durch ein nicht gezeigtes Befestigungsmittel (Schraube, Bolzen, etc.) am Trägermodul 109 befestigt werden.

Alternativ kann das Probenmodul 129 in einer weiteren (nicht gezeigten) Ausgestaltung auch mittels auf der Oberseite des Trägermoduls 109 vorgesehener Gewindelöcher 129a am Trägermodul 109, also auf diesem, befestigt werden. Diese Arten der Verbindung zwischen Trägermodul 109 und Probenmodul 129 können auch miteinander kombiniert werden.

Rein beispielhaft umfasst das gezeigte Probenmodul 129, welches alternativ als Probenträger bezeichnet werden kann, eine Detektions- und/oder Beleuchtungsoptik 129b, eine Beleuchtungseinheit 129c, einen Temperaturfühler 129d, einen Controller 129e und einen Anschlussbereich 129f mit einem Probenträgerkonnektor 129g, mittels welchem die am Probenmodul 129 befestigten Elemente angesprochen, gesteuert oder ausgelesen werden können.

Der Probenträgerkonnektor 129g kann eine genormte bzw. einheitliche Form, Größe und Anschlussbelegung aufweisen, sodass ein universelles (nicht gezeigtes) Kabel zur Kontaktierung des Probenmoduls 129 und darauf angeordneter Elemente genutzt werden kann.

Der Controller 129e ist in Fig. 1 zusätzlich separat und schematisch dargestellt. Dieser kann eine Datenverarbeitungseinheit 129k aufweisen. Der Controller 129e, als auch die Datenverarbeitungseinheit 129k können auch Teil des Haltesystems 101 und nicht dem Probenmodul 129 zugeordnet sein. Die Datenverarbeitungseinheit 129k kann über einen Steuersignalausgang 129m ein schematisch in Form eines Pulses dargestelltes Steuersignal 129p bereitstellen. Ferner kann die Datenverarbeitungseinheit 129k ein Korrelationsmodul 129q aufweisen. Dieses ist in der gezeigten Ausgestaltung Teil der Datenverarbeitungseinheit 129k, kann in anderen Ausgestaltungen aber auch separat hiervon bereitgestellt sein. Der Steuersignalausgang 129m kann auch am Probenträgerkonnektor 129g anliegen.

Das Probenmodul 129 kann alternativ oder zusätzlich einen Energiespeicher 129h, beispielsweise einen Akkumulator und/oder ein Funkmodul 129i aufweisen.

Insbesondere die Kombination aus Energiespeicher 129h und Funkmodul 129i erlauben eine völlig autarke Steuerung und/oder Kontrolle möglicher Prozessparameter in der Probe 105 (beispielsweise eine vom Temperatursensor 129d ermittelte Temperatur). Die Übertragung per Funk kann alternativ oder zusätzlich zu einer kabelgebundenen Übertragung erfolgen.

In anderen Ausgestaltungen des Probenmoduls 129 können Stabilisatoren, Heiz und/oder Kühlelemente, elektrisch steuerbare Verschiebetische und ähnliche Elemente durch Nutzung des Funkmoduls 129i und/oder des Probenträgerkonnektors 129g angesteuert und oder ausgelesen werden. Die Übertragung per Funk kann ausgeschaltet werden, sofern eine kabelgebundene Verbindung besteht.

Rein beispielhaft kann der Probenträgerkonnektor 129g über ein Kabel (nicht gezeigt) mit einem Modulkonnektor 123 des Trägermoduls 109 verbunden werden.

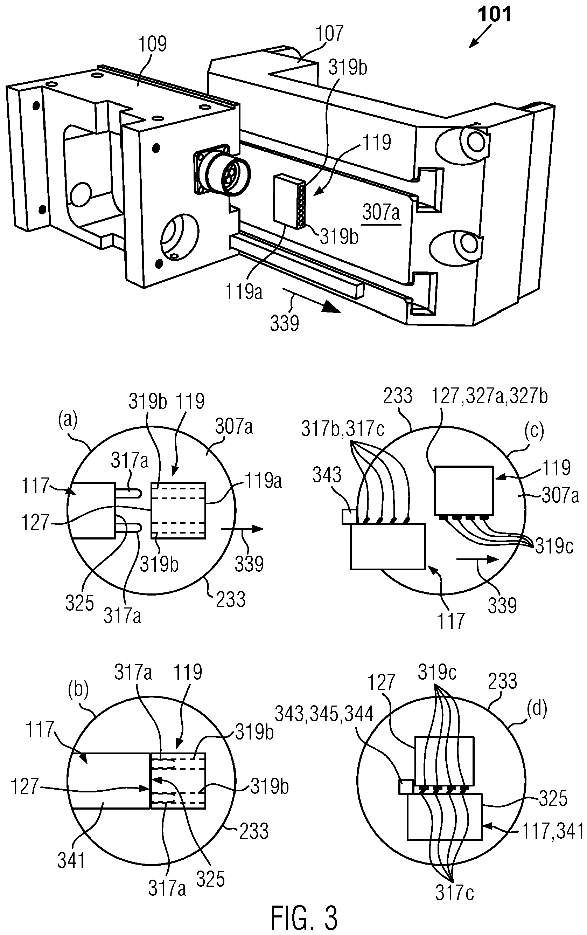

Der Modulkonnektor 123 ist mittels Daten- und/oder Leistungsleitungen 121 mit einem elektrischen Anschluss 117 des Trägermoduls 109 verbunden. Dieser Anschluss 117 ist in Fig. 1 verdeckt, jedoch in Fig. 3 im Detail gezeigt.

Somit wird folglich eine elektrische bzw. eine Daten- oder Signalverbindung vom elektrischen Anschluss 117 zum Modulkonnektor 123 durchgeschleift. Dies kann beidseitig geschehen, sodass das Trägermodul 109 auf beiden Seiten einen Modulkonnektor 123 aufweisen kann (vergleiche Fig. 2, Fig. 4 und Fig. 5) je nach eingesetztem Probenmodul 129 kann der eine oder der andere Modulkonnektor 123 günstiger für die Verbindung mittels des nicht gezeigten Kabels liegen. Die Modulkonnektoren 123 können zur Unterscheidung als erster 123a (Fig. 1) und zweiter Modulkonnektor 123b (Fig. 2) bezeichnet werden.

Das Haltemodul 107 weist Führungselemente 113 auf, die als T-förmige Nuten 113a ausgestaltet sind. In diese Führungselemente 113 des Haltemoduls 107 sind Führungselemente 115 des Trägermoduls 109 eingesetzt. Die Führungselemente 115 sind im Wesentlichen komplementär zu den Führungselementen 113 ausgestaltet und sind in verschiedenen Ausführungen in Fig. 2 gezeigt.

Die Führungselemente 113 und 115 sind Bestandteile einer Führungsvorrichtung 111. Über diese Führungsvorrichtung 111 ist das Trägermodul 109 relativ zum Haltemodul 107 beweglich am Haltemodul 107 befestigt.

Das Haltemodul 107 weist zudem einen Gegenanschluss 119 auf, der ausgestaltet ist, den elektrischen Anschluss 117 des Trägermoduls 109 elektrisch zu kontaktieren. Dies ist mit Bezug zu Fig. 3 näher beschrieben.

In der in Fig: 1 gezeigten Ausgestaltung weist ein Gehäuse 119a des Gegenanschlusses 119 ferner eine Gegenanschlagfläche 127 auf. Auch auf diese Gegenanschlagfläche 127 wird in Fig. 3 näher eingegangen.

In Fig. 2 ist das Haltesystem 101 der Fig. 1 zur besseren Anschaulichkeit aus einer anderen Perspektive gezeigt. Zu erkennen ist, dass die Führungselemente 115 des Trägermoduls 109 als Schienen 231 ausgestaltet sind, die an Befestigungsstellen 231a am Trägermodul 109 befestigt sind. Die Schienen 231 gleiten in den T-förmigen Nuten 113a. Somit ist das Trägermodul 109 relativ zum Haltemodul 107 beweglich am Haltemodul 107 befestigt.

In einer nicht gezeigten Ausgestaltung können die Schienen 231 am Haltemodul 107 und die T-förmigen Nuten 213a am Trägermodul 109 angebracht sein. D.h., dass die Führungselemente 113 des Haltemoduls 107 und die Führungselemente 115 des Trägermoduls 109 am jeweils anderen Modul 107, 109 angebracht sein können.

In schematisch dargestellten Detailzeichnungen in Kreisen 233 sind weitere mögliche Ausgestaltungen der Führungsvorrichtung 111 gezeigt.

Zur optischen Unterscheidung sind das jeweilige Haltemodul 107 und zugehörige Trägermodul 109 mit einer Schaffuhr versehen, die keine Schnittdarstellung verdeutlichen soll.

In (a) ist die Führungsvorrichtung 111 als Schwalbenschwanz ausgestaltet. Sowohl die Führungselemente 113 am Haltemodul 107 (die Nut), als auch die Führungselemente 115 am Trägermodul 109 sind monolithisch mit dem jeweiligen Modul 107, 109 verbunden.

In (b) weist das Trägermodul 109 zusätzlich eine Rollenhalterung 209a mit beidseitig auf einer L-förmigen Führungsschiene 207a anliegenden Rollen 209b auf. Diese Ausgestaltung ist somit nicht monolithisch. Alternativ oder zusätzlich können auch Walzen verwendet werden

Die in (a) und (b) gezeigten Ausführungsformen der Führungsvorrichtung 111 sind rein beispielhaft gezeigt. Es sind auch andere Formen der Führungselemente 113, 115 denkbar. Diese können in anderen Ausgestaltungen nicht durchgängig, d.h. unterbrochen sein.

Das in den Fig. 1 und Fig. 2 gezeigte Haltesystem 101 weist zudem eine weitere Führungsnut 135 und ein in diese eingreifendes weiteres Führungselement 137 auf.

In der Fig. 2 ist ferner der zusätzliche bzw. alternative zweite Modulkonnektor 123b des Trägermoduls 109, sowie der Modulkonnektor 123 des Haltemoduls 107 gezeigt. Der Modulkonnektor 123 des Haltemoduls 107 kann zur Unterscheidung als dritter Modulkonnektor 123c bezeichnet werden. Dieser kann sich vom ersten und zweiten Modulkonnektor 123a und 123b in Geometrie und/oder Anschlussbelegung unterscheiden, oder aber identisch zu diesen sein. Auch der erste 123a und zweite Modulkonnektor 123b können sich in Geometrie und/oder Anschlussbelegung unterscheiden, oder aber identisch zueinander sein.

Die Modulkonnektoren 123 und der Probenträgerkonnektor 129g erlauben alternativ oder zusätzlich zu einer Funkverbindung mittels des Funkmoduls 129i der Fig. 1 verschiedene kabelgebundene Verbindungen:
- eine unmittelbare Verbindung des Probenmoduls 129 mittels Probenträgerkonnektor 129g mit der Vorrichtung 103 und/oder einem getrennten Server;
- eine unmittelbare Verbindung des Probenmoduls 129 mittels Probenträgerkonnektor 129g mit dem Modulkonnektor 123 (bevorzugt dem ersten Modulkonnektor 123a) des Trägermoduls 109 und eine unmittelbare Verbindung zwischen dem Modulkonnektor 123 (bevorzugt dem zweiten Modulkonnektor 123b) des Trägermoduls 109 mit der Vorrichtung 103 und/oder einem getrennten Server; oder
- eine unmittelbare Verbindung des Probenmoduls 129 mittels Probenträgerkonnektor 129g mit dem Trägermodul 109 und eine unmittelbare Verbindung zwischen Trägermodul 109 und Haltemodul 107 mittels des elektrischen Anschlusses 117 des Trägermoduls 109 und dem Gegenanschluss 119 des Haltemoduls 107 und einer unmittelbaren Verbindung über den Modulkonnektor 123 (den dritten Modulkonnektor 123c) des Haltemoduls 107 mit der Vorrichtung 103 und/oder einem getrennten Server.

Die kabelgebundene Verbindung ist über außen verlaufende separate (nicht gezeigte) Kabel, oder über intern (durchgeschleifte) Kabel möglich.

Anhand der Fig. 3 soll nunmehr das Zusammenwirken des elektrischen Anschlusses 117 des Trägermoduls 109 mit dem Gegenanschluss 119 des Haltemoduls 107 beschrieben werden.

Wie bereits im Zusammenhang mit Fig. 1 erwähnt, kann das Haltemodul 107 ein Gehäuse 119a aufweisen, welches monolithisch mit einem Grundkörper 307a des Haltemoduls 107 verbunden sein kann. In Gehäuse 119a befindet sich der Gegenanschluss 119, der elektrische Kontakte 319b aufweist. In Fig. 3 sind der Übersichtlichkeit halber nicht alle elektrischen Kontakte 319b mit einem Bezugszeichen versehen.

In der in Fig. 3 gezeigten Ausgestaltung des Haltesystems 101 weist der Gegenanschluss 119 auch auf der verdeckten, zum Trägermodul 109 weisenden Seite elektrische Kontakte 319b auf. Wird das Trägermodul 109 entlang einer Verschieberichtung 339 bewegt, so kann der elektrische Anschluss 117 des Trägermoduls 109 den Gegenanschluss 119 kontaktieren.

Dies ist schematisch in den Kreisen 233 (a) und 233 (b) gezeigt. In diesen ist nur der elektrische Anschluss 117 dargestellt und der Rest des Trägermoduls 109 der Übersichtlichkeit halber nicht. Zur Vereinfachung sind lediglich zwei elektrische Kontakte 319b mit gestrichelten Linien gezeichnet. Der elektrische Anschluss 117 weist elektrische Gegenkontakte 317a, zum Beispiel in Form von Kontaktpins auf.

Wird das Trägermodul 109 und damit der elektrische Anschluss 117 in Verschieberichtung 339 bewegt, so ist dies bis zu einer Berührung einer Anschlagfläche 325 mit der Gegenanschlagfläche 127 möglich. Dies ist in einer Referenzposition 341 der Fall.

Mit Bezug zu Fig. 3 sei angemerkt, dass die Referenzposition 341 zwar nur für den elektrischen Anschluss 117 eingezeichnet ist, sich allerdings in diesem Fall das gesamte Trägermodul 109 in der Referenzposition 341 befindet. Diese Referenzposition 341 ist durch die Anschlagfläche 325 und die Gegenanschlagfläche 127 präzise und insbesondere reproduzierbar einstellbar. Die Referenzposition 341 repräsentiert eine festgelegte relative Lage zwischen Haltemodul 107 und Trägermodul 109.

Im Kreis 233 (c) ist eine weitere Ausgestaltung des Gegenanschlusses 119 gezeigt. Dieser weist Kontaktflächen 319c auf, welche mit auslenkbaren Kontakten 317b, wie beispielsweise Lamellenkontakten 317c in Kontakt gebracht werden können, wenn sich das Trägermodul 119 (und somit der elektrische Anschluss 117) in Verschieberichtung 339 bewegen.

In dieser Ausgestaltung kann es vorteilhaft sein, wenn die Gegenanschlagfläche 127 als optische Anschlagfläche 327a oder als Detektionsfläche 327b ausgestaltet ist. Das heißt, dass die optische Anschlagfläche 327a verwendet wird, um über eine, an dieser erfolgende Reflexion eines Lichtimpulses einen relativen Abstand zwischen dem Haltemodul 107 und dem Trägermodul 109 zu detektieren. Hierzu kann das Trägermodul 109, insbesondere der elektrische Anschluss 117 ein optisches Distanzmessmodul 343 umfassen, welches Lichtimpulse aussenden kann, die an der optischen Anschlagfläche 327a reflektiert werden und aus einer ermittelten Laufzeit die Berechnung eines Abstandes zwischen Haltemodul 107 und Trägermodul 109 ermöglicht. Das optische Distanzmessmodul 343 ist stellvertretend für jedwede Art einer Detektoreinrichtung 344 gezeigt. Die Detektoreinrichtung 344 ist ausgestaltet, zumindest die Referenzposition 341 des Trägermoduls 109 zu detektieren und bei Erreichen der Referenzposition 341 ein diese Referenzposition 341 repräsentierendes Positionssignal auszugeben. Dies kann beispielsweise das in Fig. 1 schematisch dargestellte Steuersignal 129p sein oder im Steuersignal 129p enthalten sein.

Im Kreis 233 (d) ist das Trägermodul 109 in der Referenzposition 341, in welcher die Kontaktflächen 319c in Kontakt mit den Lamellenkontakten 317c sind. In dieser Ausgestaltung ist die Referenzposition 341 somit nicht durch ein mechanisches Anliegen der Anschlagflächen 325, 127 bestimmt. Lediglich aufgrund der Perspektive scheinen sich diese zu berühren.

Das Erreichen der Referenzposition 341 kann, wie zuvor beschrieben durch das optische Distanzmessmodul 343 oder einen anderen Abstandssensor 345 detektiert und übermittelt werden. Diese können beispielsweise mechanische, elektrische, magnetische oder auf unterschiedlichen Prinzipien basierende Sensoren sein.

In der Fig. 4 ist eine weitere Ausgestaltung des erfindungsgemäßen Haltesystems 101 in drei unterschiedlichen Positionen (a), (b) und (c) gezeigt.

Das Haltesystem 101 umfasst ein Haltemodul 107, das Trägermodul 109 und ein weiteres Trägermodul 447. Das Trägermodul 109 und das weitere Trägermodul 447 sind durch zwei gemeinsame Schienen 449 miteinander verbunden, die sowohl am Trägermodul 109 als auch am weiteren Trägermodul 447 befestigt sind. In einer weiteren (nicht gezeigt) möglichen Ausgestaltung können die gemeinsamen Schienen 449 am Haltemodul 107 befestigt sein.

In (a) befindet sich das Trägermodul 109 in der Referenzposition 341. Am Trägermodul 109 kann beispielsweise ein Probenmodul 129 (nicht gezeigt, siehe Fig. 1) angebracht sein, welches eine (nicht gezeigte) erste Probe 105 tragen kann. Nachdem diese erste Probe 105 untersucht oder manipuliert wurde, werden das Trägermodul 109 und das weitere Trägermodul 447 in Verschieberichtung 339 bewegt. Ein Zwischenzustand 401a ist in (b) gezeigt.

Werden das Trägermodul 109 und das weitere Trägermodul 447 weiter in Verschieberichtung 339 bewegt, so befindet sich, wie in (c) gezeigt, nunmehr das weitere Trägermodul 447 in der, diesem weiteren Trägermodul 447 zugeordneten Referenzposition 341. Das weitere Trägermodul 447 kann beispielsweise eine (nicht gezeigte) zweite Probe 105 tragen. Ein Wechsel zwischen der ersten und der zweiten Probe 105 ist somit einfach und ohne Justage möglich.

Die in Fig. 4 gezeigte Ausgestaltung des Haltesystems 101 hat den Vorteil, dass beispielsweise zwei unterschiedliche Proben im Wechsel von einer Vorrichtung (nicht gezeigt) untersucht oder manipuliert werden können. Hierzu ist das Haltemodul 107 an der Vorrichtung befestigt und es können im Wechsel das Trägermodul 109 bzw. das weitere Trägermodul 447 in die dem jeweiligen Modul 109, 447 zugeordnete Referenzposition 341 bewegt werden. In dieser Ausgestaltung des Haltesystems 101 kann der elektrische Anschluss 319 der Fig. 3 (a) oder (c) verwendet werden.

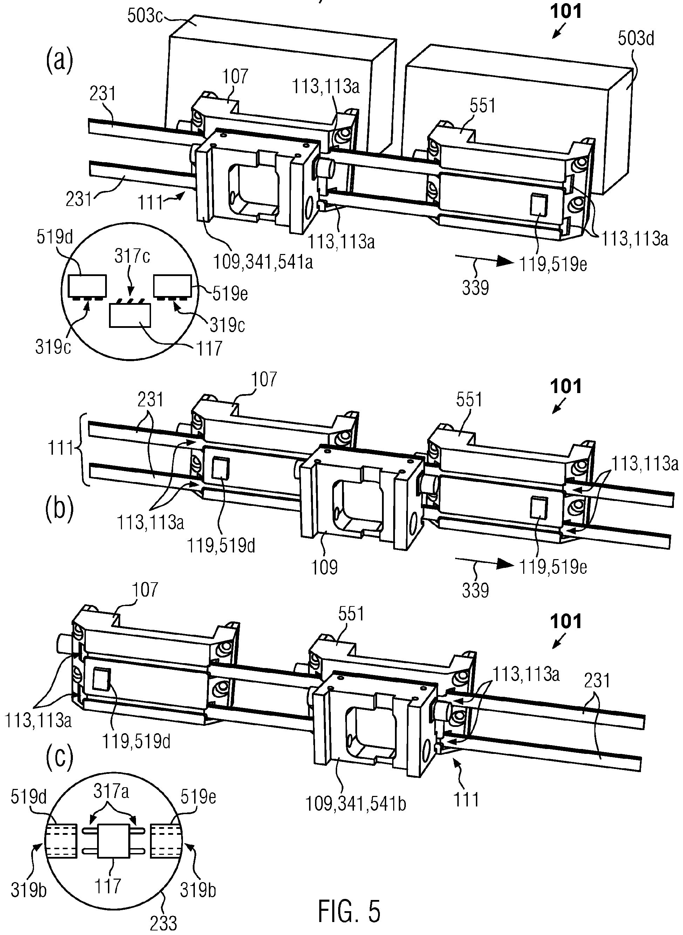

In der Fig. 5 ist eine weitere Ausgestaltung des erfindungsgemäßen Haltesystems 101 gezeigt. Diese Ausgestaltung unterscheidet sich von den zuvor gezeigten Ausgestaltungen durch ein weiteres Haltemodul 551.

Das Trägermodul 109 ist über eine zwei Schienen 231 umfassende Führungsvorrichtung 111 sowohl relativ zum Haltemodul 107 als auch relativ zum weiteren Haltemodul 551 geführt beweglich. Die Schienen 231 sind dabei in Führungselementen 113 des Haltemoduls 107 als auch des weiteren Haltemoduls 551 aufgenommen und geführt. Die Führungselemente 113 sind jeweils T-förmige Nuten 113a. In der gezeigten Ausgestaltung sind die Schienen 231 am Trägermodul 109 befestigt.

In einer weiteren möglichen Ausgestaltung, die nicht in den Figuren gezeigt ist, kann das Trägermodul 109 mit einer T-förmigen Nut 113a versehen und die Schienen 231 sowohl am Haltemodul 107, als auch am weiteren Haltemodul 551 befestigt sein. Eine solche Ausgestaltung hat den Vorteil, dass bei Bewegung des Trägermoduls 109 die Schienen 231 nicht seitlich über das Haltemodul 107 (siehe (a)) bzw. über das weitere Haltemodul 551 (siehe (c)) hinausragen und somit weniger Platz benötigt wird.

In (a) befindet sich das Trägermodul 109 in der Referenzposition 341, genauer gesagt in einer Referenzposition 541a bezüglich des Haltemoduls 107.

In der mittleren Darstellung unter (b) befindet sich das Trägermodul 109 zwischen dem Haltemodul 107 und dem weiteren Haltemodul 551.

Bei weiterer Bewegung entlang der Verschieberichtung 339 wird das Trägermodul 109 in die Referenzposition 341, genauer in eine Referenzposition 541b bezüglich des weiteren Haltemoduls 551 gebracht.

In den Darstellungen der einzelnen Teilschritte von (a) bis (c) ist der Gegenanschluss 119 des Haltemoduls 107 und/oder des weiteren Haltemoduls 551 gezeigt. Zur Unterscheidung werden diese mit dem Bezugszeichen 519d (am Haltemodul 107) bzw. 519e (am weiteren Haltemodul 551) versehen.

Mit Referenz zu den in Fig. 3 gezeigten Möglichkeiten der Verbindung zwischen dem elektrischen Anschluss 117 des Trägermoduls 109 und dem Gegenanschluss 119, kann der elektrische Anschluss 117 mit Lamellenkontakten 317c versehen sein und entsprechende Kontaktflächen 319c der Gegenanschlüsse 519e kontaktieren. Dies ist unter (a) schematisch und stark vereinfacht dargestellt.

Alternativ kann der elektrische Anschluss 117 stiftförmige elektrische Gegenkontakte 317a aufweisen, die beidseitig in bzw. entgegen der Verschieberichtung 339 aus dem elektrischen Anschluss 119 hervorragen. In der Referenzposition 541a als auch in der Referenzposition 541b sind diese elektrischen Gegenkontakte 317a in entsprechende elektrische Kontakte 319b der Gegenanschlüsse 519d bzw. 519e eingesteckt. Dies ist schematisch unter (c) dargestellt.

Zum Kreis 233 unter (c) ist anzumerken, dass hierin eine Situation gemäß dem Zustand des Haltesystems 101 unter (b) gezeigt ist. Im Zustand unter (a) sind die nach links ragenden elektrischen Gegenkontakte 317a in elektrische Kontakte 319b des Gegenanschlusses 519d des Haltemoduls 107 eingesteckt, wohingegen im unter (c) gezeigten Zustand die nach rechts ragenden elektrischen Gegenkontakte 317a in elektrische Kontakte 319b des Gegenanschlusses 519e des weiteren Haltemoduls 551 eingesteckt sind. Hierzu wird insbesondere auf den Kreis 233(b) der Fig. 3 verwiesen.

Das in Fig. 5 gezeigte Haltesystem 101 hat den Vorteil, dass eine nicht gezeigte Probe, die mittels eines nicht gezeigten Probenmoduls (siehe Fig. 1) vom Trägermodul 109 gehalten bzw. getragen und bewegt wird, durch die Führungsvorrichtung 111 reproduzierbar von einer ersten Vorrichtung 503c zu einer zweiten Vorrichtung 503d bewegt werden kann und sich an der jeweiligen Vorrichtung 503c, 503d in einer entsprechenden Referenzposition 541a bzw. 541b befindet. Die erste bzw. zweite Vorrichtung 503c, 503d sind lediglich schematisch unter (a) angedeutet. Diese Vorrichtungen können identisch oder unterschiedlich sein.

Unabhängig davon, in bzw. durch welche der Vorrichtungen 503c bzw. 503d die nicht gezeigte Probe untersucht und/oder manipuliert wird, ist durch die Bereitstellung der entsprechenden Referenzposition 541a bzw. 541b eine Neuausrichtung / Justage der Probe nicht notwendig.

Alle zuvor gezeigten Ausgestaltungen können mit beliebigen Probenmodulen (siehe Fig. 1) betrieben werden. Im Fig. 1 gezeigten Probenmodul 129 wird das Funkmodul 129i durch das Probenmodul 129 bereitgestellt. In anderen Ausgestaltungen können ein solches Funkmodul 129i, und/oder entsprechende dazugehörige Elektronik wie der Energiespeicher 129h und/oder ein entsprechender Controller 129e auch von dem Trägermodul 109 bzw. einem weiteren Trägermodul 447 bereitgestellt und an diesem befestigt sein. Dies erlaubt es, Steuer- oder Messdaten auch dann vom / zum Trägermodul 109 zu übertragen, wenn sich dieses nicht in einer Referenzposition befindet und nicht über den elektrischen Anschluss und dem Gegenanschluss mechanisch elektrisch mit einem entsprechenden Haltemodul 107 verbunden ist.

In anderen Ausgestaltungen kann die Führungsvorrichtung 111 der Fig. 4 bzw. der Fig. 5 nicht durch eine entsprechende Schiene, sondern durch sich hintergreifende Elemente wie bei einer Schwalbenschwanzführung realisiert sein. In diesem Fall kann ein Trägermodul (bzw. zusätzlich ein weiteres Trägermodul) an beliebig vielen Haltemodulen 107 angebracht werden. An jedem Haltemodul 107 kann das Trägermodul 109 in eine, dem jeweiligen Haltemodul 107 zugeordnete Referenzposition 341 bewegt werden. Möglichkeiten, diese Referenzposition 341 sicherzustellen bzw. zu detektieren sind in Fig. 3 beschrieben.

### Bezugszeichenliste

- 101: Haltesystem
- 103: Vorrichtung
- 103a: Mikroskop
- 103b: Probeaufnahmebereich
- 105: Probe
- 107: Haltemodul
- 109: Trägermodul
- 111: Führungsvorrichtung
- 113: Führungselement am Haltemodul
- 113a: T-förmige Nut
- 115: Führungselement am Trägermodul
- 117: elektrischer Anschluss
- 119: Gegenanschluss
- 119a: Gehäuse
- 121: Daten-und/oder Leistungsleitungen
- 123: Modulkonnektor
- 123a: erster Modulkonnektor
- 123b: zweiter Modulkonnektor
- 123c: dritter Modulkonnektor
- 125: Anschlagfläche
- 127: Gegenanschlagfläche
- 129: Probenmodul
- 129a: Gewindeloch
- 129b: Detektions- und/oder Beleuchtungsoptik
- 129c: Beleuchtungseinheit
- 129d: Temperaturfühler
- 129e: Controller
- 129f: Anschlussbereich
- 129g: Probenträgerkonnektor
- 129h: Energiespeicher
- 129i: Funkmodul
- 129k: Datenverarbeitungseinheit
- 129m: Steuersignalausgang
- 129p: Steuersignal
- 129q: Korrelationsmodul
- 133: Aufnahmekulisse
- 135: weitere Führungsnut
- 137: weiteres Führungselement
- 207a: L-förmige Führungsschiene
- 209a: Rollenhalterung
- 209b: Rolle
- 231: Schiene
- 231: Befestigungsstelle
- 233: Kreis
- 307a: Grundkörper
- 317a: elektrischer Gegenkontakt
- 317b: auslenkbarer Kontakt
- 317c: Lamellenkontakt
- 319b: elektrischer Kontakt
- 319c: Kontaktfläche
- 327a: optische Anschlagfläche
- 327b: Detektionsfläche
- 339: Verschieberichtung
- 341: Referenzposition
- 343: optisches Distanzmessmodul
- 344: Detektoreinrichtung
- 345: Abstandssensor
- 447: weiteres Trägermodul
- 449: gemeinsame Schiene
- 401a: Zwischenzustand
- 551: weiteres Haltemodul
- 541a: Referenzposition bezüglich des Haltemoduls
- 541b: Referenzposition bezüglich des weiteren Haltemoduls
- 519d: Gegenanschluss des Haltemoduls
- 519e: Gegenanschluss des weiteren Haltemoduls
- 503c: erste Vorrichtung
- 503d: zweite Vorrichtung

## Patentansprüche

1. Haltesystem (101) zur Befestigung an einer Vorrichtung (103) zur Untersuchung und/oder zur Manipulation von Proben (105), wobei das Haltesystem (101) umfasst:
- ein Haltemodul (107) zur Befestigung des Haltesystems (101) an der Vorrichtung (103); und
- ein am Haltemodul (107) wiederholt austauschbar gehaltenes Trägermodul (109) zur Aufnahme und/oder Halterung einer Probe (105),
**dadurch gekennzeichnet, dass**
das Haltesystem (101) eine Referenzposition (341) für das Trägermodul (109) bereitstellt, in der das Trägermodul (109) in einer wiederholt reproduzierbaren relativen Position zum Haltemodul (107) festgelegt ist und wobei das Trägermodul (109) in der Referenzposition (341) mit dem Haltemodul (107) verrastbar ist.

2. Haltesystem (101) nach Anspruch 1, umfassend eine Führungsvorrichtung (111), über die das Trägermodul (109) relativ zum Haltemodul (107) beweglich am Haltemodul (107) befestigt ist.

3. Haltesystem (101) nach Anspruch 2, wobei die Referenzposition (341) von der Führungsvorrichtung (111) bereitgestellt ist.

4. Haltesystem (101) nach Anspruch 2 oder 3, wobei die Führungsvorrichtung (111) ein Führungselement (113) am Haltemodul (107) und ein Führungselement (115) am Trägermodul (109) aufweist.

5. Haltesystem (101) nach Anspruch 4, wobei sich das Führungselement (113) am Haltemodul (107) und das Führungselement (115) am Trägermodul (109) abschnittsweise hintergreifen.

6. Haltesystem (101) nach Anspruch 4 oder 5, wobei das Führungselement (113) am Haltemodul (107) oder das Führungselement (115) am Trägermodul (109) zumindest teilweise als Schiene (231) ausgeprägt ist, auf welcher das Trägermodul (109) relativ zum Haltemodul (107) beweglich geführt ist.

7. Haltesystem (101) nach einem der Ansprüche 1 bis 6, wobei das Trägermodul (109) wenigstens einen elektrischen Anschluss (117) aufweist, mittels welchem das Trägermodul (109) mit einem Gegenanschluss (119) des Haltemoduls (107) elektrisch verbindbar ist.

8. Haltesystem (101) nach Anspruch 7, wobei Daten- und/oder Leistungsleitungen (121) des Anschlusses (117) zumindest teilweise vom Anschluss (117) zu einem Modulkonnektor (123) des Trägermoduls (109) durchgeschleift werden.

9. Haltesystem (101) nach einem der Ansprüche 1 bis 8, wobei das Haltesystem (101) ein Funkmodul (129i) umfasst, welches ausgestaltet ist, Daten vom Trägermodul (109) zu senden und/oder Daten am Trägermodul (109) zu empfangen.

10. Haltesystem (101) nach einem der Ansprüche 1 bis 9, umfassend wenigstens ein Element aus der Gruppe:
- eine Anschlagfläche (125) des Trägermoduls (109), welche zumindest in der Referenzposition (341) an einer Gegenanschlagsfläche (127) des Haltemoduls (107) anliegt;
- ein Verrastungselement des Trägermoduls (109), welches zumindest in der Referenzposition (341) mit einem Gegenrastelement des Haltemoduls (107) verrastet ist; und
- eine Detektoreinrichtung (344), die ausgestaltet ist, zumindest die Referenzposition (341) des Trägermoduls (109) zu detektieren und bei Erreichen der Referenzposition (341) ein die Referenzposition (341) repräsentierendes Positionssignal auszugeben.

11. Haltesystem (101) nach Anspruch 10, wobei das Haltesystem ausgestaltet ist, in Abhängigkeit einer von der Detektoreinrichtung (344) ermittelten Position des Trägermoduls (109) ein Steuersignal (129p) auszugeben.

12. Haltesystem (101) nach Anspruch 11, wobei die Ausgabe des Steuersignals (129p) abhängig von einem Vergleich der Position des Trägermoduls (109) mit wenigstens einer vorab festgelegten Referenzposition des Trägermoduls (109) ist.

13. Haltesystem (101) nach einem der Ansprüche 1 bis 12, umfassend wenigstens ein weiteres Trägermodul (447), wobei das Trägermodul (109) und das wenigstens eine weitere Trägermodul (447) gegeneinander austauschbar am Haltemodul (107) beweglich anbringbar ausgestaltet sind.

14. Haltesystem (101) nach einem der Ansprüche 1 bis 13, umfassend wenigstens ein weiteres Haltemodul (551), wobei das Trägermodul (109) vom Haltemodul (107) hin zum weiteren Haltemodul (551) relativ zu diesen beweglich gehalten ist.

15. Haltesystem (101) nach einem der Ansprüche 1 bis 14, wobei wenigstens zwei Haltemodule (107, 551) vorgesehen sind, an welchen das wenigstens eine Trägermodul (109) gehalten und abwechselnd in eine dem jeweiligen Haltemodul (107, 551) zugeordnete Referenzposition (541, 541a, 541b) beweglich ist.

16. Vorrichtung (103) zur Untersuchung und/oder zur Manipulation von Proben (105), umfassend wenigstens ein Gerät wie ein Mikroskop (103a) und/oder ein Mikrotom, mit einem Haltesystem (101) gemäß einem der Ansprüche 1 bis 15.

17. Vorrichtung (103) nach Anspruch 16, wobei das Trägermodul (109) mittels eines elektrischen Anschlusses (117) wenigstens in der Referenzposition (341) automatisch mit der Vorrichtung (103) elektrisch oder über Funk verbunden ist.

18. System mit einem Haltesystem (101) nach einem der Ansprüche 1 bis 15 und wenigstens zwei Vorrichtungen (103) zur Untersuchung und/oder zur Manipulation von Proben (105), wobei jede der wenigstens zwei Vorrichtungen (103) mit wenigstens einem Haltemodul (107) versehen ist.

19. System nach Anspruch 18, wobei das vom Haltesystem (101) ausgegebene Steuersignal (129p) wenigstens einen in der ermittelten Position des Trägermoduls (109) auszuführenden, direkten oder indirekten Verfahrensschritt zur Untersuchung und/oder zur Manipulation der Probe (105) repräsentiert.

## Claims

1. A holding system (101) for attachment to a device (103) for testing and/or manipulating samples (105), the holding system (101) comprising:
- a holding module (107) for attaching the holding system (101) to the device (103); and
- a carrier module (109) held on the holding module (107) in a repeatedly exchangeable manner for receiving and/or holding a sample (105),
**characterized in that** the holding system (101) provides a reference position (341) for the carrier module (109), in which the carrier module (109) is fixed in a repeatedly reproducible position relative to the holding module (107), and wherein the carrier module (109) is latchable to the holding module (107) in the reference position (341).

2. The holding system (101) according to claim 1, comprising a guiding device (111), via which the carrier module (109) is moveably fastened to the holding module (107) relative to the holding module (107).

3. The holding system (101) according to claim 2, wherein the reference position (341) is provided by the guiding device (111).

4. The holding system (101) according to claim 2 or 3, wherein the guiding device (111) includes one guiding element (113) at the holding module (107) and one guiding element (115) at the carrier module (109).

5. The holding system (101) according to claim 4, wherein the guiding element (113) at the holding module (107) and the guiding element (115) at the carrier module (109) engage behind one another, sectionally.

6. The holding system (101) according to claim 4 or 5, wherein one of the guiding element (113) at the holding module (107) and the guiding element (115) at the carrier module (109) is formed at least partially as a rail (231) on which the carrier module (109) is guided movably relative to the holding module (107).

7. The holding system (101) according to any of claims 1 to 6, wherein the carrier module (109) includes at least one electrical terminal (117), by means of which the carrier module (109) is electrically connectable to a mating terminal (119) of the holding module (107).

8. The holding system (101) according to claim 7, wherein data and/or power lines (121) of the terminal (117) are at least partially looped through from the terminal (117) to a module connector (123) of the carrier module (109).

9. The holding system (101) according to any of claims 1 to 8, wherein the holding system (101) comprises a radio module (1291) which is configured to transmit data from the carrier module (109) and/or to receive data at the carrier module (109).

10. The holding system (101) according to any of claims 1 to 9, comprising at least one element from the group:
- a stop surface (125) of the carrier module (109), which at least in the reference position (341) abuts against a mating stop surface (127) of the holding module (107);
- a latching element of the carrier module (109), which is latched at least in the reference position (341) with a mating latching element of the holding module (107); and
- a detector device which is configured to detect at least the reference position (341) of the carrier module (109) and, when reaching the reference position (341), to output a position signal representing the reference position (341).

11. The holding system (101) according to claim 10, wherein the holding system is configured to output a control signal (129p) depending on a position of the carrier module (109) determined by the detector device (344).

12. The holding system (101) according to claim 11, wherein outputting the control signal (129p) depends on a comparison of the position of the carrier module (109) with at least one reference position of the carrier module (109) determined in advance.

13. The holding system (101) according to any of claims 1 to 12, comprising at least one further carrier module (447), wherein the carrier module (109) and the at least one further carrier module (447) are configured to be attachable mutually exchangeable to the holding module (107).

14. The holding system (101) according to any of claims 1 to 13, comprising at least one further holding module (551), wherein the carrier module (109) is held movably from the holding module (107) in the direction of the further holding module (551) relative thereto.

15. The holding system (101) according to any of claims 1 to 14, wherein at least two holding modules (107, 551) are provided, on which the at least one carrier module (109) is held and alternately movable into a reference position (541, 541a, 541b) associated with the respective holding module (107, 551).

16. A device (103) for testing and/or manipulating samples (105), comprising at least one apparatus such as a microscope (103a) and/or a microtome, having a holding system (101) according to any of claims 1 to 15.

17. The device (103) according to claim 16, wherein the carrier module (109) is at least in the reference position (341) automatically connected to the apparatus (103) electrically or wirelessly by means of an electrical terminal (117).

18. A system comprising a holding system (101) according to any one of claims 1 to 15 and at least two devices (103) for testing and/or manipulating samples (105), wherein each of the at least two devices (103) is provided with at least one holding module (107).

19. The system according to claim 18, wherein the control signal (129p) output by the holding system (101) represents at least one direct or indirect procedural step to be carried out in the determined position of the carrier module (109) for examining and/or manipulating the sample (105).

## Revendications

1. Système de retenue (101) permettant une fixation à un dispositif (103) permettant d'examiner et/ou de manipuler des échantillons (105), dans lequel le système de retenue (101) comprend :
- un module de retenue (107) permettant de fixer le système de retenue (101) au dispositif (103) ; et
- un module porteur (109) retenu au niveau du module de retenue (107) de manière échangeable à plusieurs reprises et permettant d'accueillir et/ou de retenir un échantillon (105),
**caractérisé en ce que**
le système de retenue (101) fournit pour le module porteur (109) une position de référence (341) dans laquelle le module porteur (109) est établi dans une position relative, pouvant être reproduite à plusieurs reprises, par rapport au module de retenue (107), et dans lequel le module porteur (109) peut être bloqué dans la position de référence (341) avec le module de retenue (107).

2. Système de retenue (101) selon la revendication 1, comprenant un dispositif de guidage (111) par l'intermédiaire duquel le module porteur (109) est fixé au module de retenue (107) de manière mobile par rapport au module de retenue (107).

3. Système de retenue (101) selon la revendication 2, dans lequel la position de référence (341) est fournie par le dispositif de guidage (111).

4. Système de retenue (101) selon la revendication 2 ou 3, dans lequel le dispositif de guidage (111) présente un élément de guidage (113) au niveau du module de retenue (107) et un élément de guidage (115) au niveau du module porteur (109).

5. Système de retenue (101) selon la revendication 4, dans lequel l'élément de guidage (113) vient localement en prise par l'arrière au niveau du module de retenue (107) et l'élément de guidage (115) vient localement en prise par l'arrière au niveau du module porteur (109).

6. Système de retenue (101) selon la revendication 4 ou 5, dans lequel l'élément de guidage (113) au niveau du module de retenue (107) ou l'élément de guidage (115) au niveau du module porteur (109) se présente au moins partiellement comme un rail (231) sur lequel le module porteur (109) est guidé de manière mobile par rapport au module de retenue (107).

7. Système de retenue (101) selon l'une quelconque des revendications 1 à 6, dans lequel le module porteur (109) présente au moins un raccordement électrique (117) au moyen duquel le module porteur (109) peut être relié électriquement à un raccordement homologue (119) du module de retenue (107).

8. Système de retenue (101) selon la revendication 7, dans lequel des lignes de données et/ou de puissance (121) du raccordement (117) sont connectées en boucle au moins partiellement depuis le raccordement (117) jusqu'à un connecteur de module (123) du module porteur (109).

9. Système de retenue (101) selon l'une quelconque des revendications 1 à 8, dans lequel le système de retenue (101) comprend un module radio (129i) conçu pour envoyer des données depuis le module porteur (109) et/ou pour recevoir des données au niveau du module porteur (109).

10. Système de retenue (101) selon l'une quelconque des revendications 1 à 9, comprenant au moins un élément issu du groupe comprenant :
- une surface de butée (125) du module porteur (109) qui repose au moins dans la position de référence (341) contre une surface de butée homologue (127) du module de retenue (107) ;
- un élément de blocage du module porteur (109) qui est bloqué au moins dans la position de référence (341) par un élément de blocage homologue du module de retenue (107) ; et
- un dispositif de détection (344) conçu pour détecter au moins la position de référence (341) du module porteur (109) et émettre un signal de position représentant la position de référence (341) lorsque la position de référence (341) est atteinte.

11. Système de retenue (101) selon la revendication 10, dans lequel le système de retenue est conçu pour émettre un signal de commande (129p) en fonction d'une position du module porteur (109) déterminée par le dispositif de détection (344).

12. Système de retenue (101) selon la revendication 11, dans lequel la sortie du signal de commande (129p) dépend d'une comparaison entre la position du module porteur (109) et au moins une position de référence préétablie du module porteur (109).

13. Système de retenue (101) selon l'une quelconque des revendications 1 à 12, comprenant au moins un module de retenue (447) supplémentaire, dans lequel le module porteur (109) et le au moins un module de retenue (447) supplémentaire sont conçus pour pouvoir être mis en place de manière mobile au niveau du module de retenue (107) et de manière à pouvoir être échangés l'un par l'autre.

14. Système de retenue (101) selon l'une quelconque des revendications 1 à 13, comprenant au moins un module de retenue (551) supplémentaire, dans lequel le module porteur (109) est retenu de manière mobile par rapport au module de retenue (551) supplémentaire par le module de retenue (107).

15. Système de retenue (101) selon l'une quelconque des revendications 1 à 14, dans lequel au moins deux modules de retenue (107, 551) sont prévus, au niveau desquels le au moins un module porteur (109) est retenu et est alternativement mobile dans une position de référence (541, 541a, 541b) associée au module de retenue (107, 551) respectif.

16. Dispositif (103) permettant d'examiner et/ou de manipuler des échantillons (105), comprenant au moins un appareil tel qu'un microscope (103a) et/ou un microtome, avec un système de retenue (101) selon l'une quelconque des revendications 1 à 15.

17. Dispositif (103) selon la revendication 16, dans lequel le module porteur (109), au moins dans la position de référence (341), est relié de manière automatique électriquement ou par radio au dispositif (103) au moyen d'un raccordement électrique (117).

18. Système comprenant un système de retenue (101) selon l'une quelconque des revendications 1 à 15 et au moins deux dispositifs (103) permettant d'examiner et/ou de manipuler des échantillons (105), dans lequel chacun des au moins deux dispositifs (103) est muni d'au moins un module de retenue (107).

19. Système selon la revendication 18, dans lequel le signal de commande (129p) émis par le système de retenue (101) représente au moins une étape de procédé directe ou indirecte à mettre en oeuvre dans la position déterminée du module porteur (109) afin d'examiner et/ou de manipuler l'échantillon (105).
